# EUROPÄISCHE PATENTSCHRIFT

(11) **EP 0 417 461 B1**
(45) Veröffentlichungstag und Bekanntmachung des Hinweises auf die Patenterteilung: **26.01.1994**
(21) Anmeldenummer: 90114997.1
(22) Anmeldetag: 04.08.1990
(51) Int. Cl.: F16K 3/08

(54) **Absperr- und Regulierventil**
Shut-off and regulator valve
Soupape d'arrêt et de réglage

(30) Priorität: 09.09.1989 DE 3930083
(43) Veröffentlichungstag der Anmeldung: 20.03.1991
(73) Patentinhaber: FRIEDRICH GROHE AKTIENGESELLSCHAFT, D-58675 Hemer (DE)
(72) Erfinder: Körfgen, Harald, D-5758 Fröndenberg (DE); Hirsch, Heinz, D-4770 Soest (DE); Grendel, Vinzenz, D-5870 Hemer (DE)

(56) Entgegenhaltungen:
- DE-A- 2 711 500
- DE-A- 2 841 998
- DE-A- 3 107 431
- DE-A- 3 828 178
- US-A- 2 556 583
- US-A- 3 834 416

## Beschreibung

Die Erfindung betrifft ein Absperr- und Regulierventil mit den im Oberbegriff des Anspruchs 1 angegebenen Merkmalen.

Ventile dieser Gattung sind bekannt (DE-OS 31 07 431). Bei diesen Ventilen strömt in Drosselstellungen das Medium direkt über die Dichtfläche der Ventilsitzscheibe, so daß es auftreten kann, daß die ventilregulierscheibe durch die Strömung in unerwünschter Weise selbsttätig verdreht wird. Außerdem kann es als nachteilig angesehen werden, daß die Strömung des Mediums an der Dichtfläche der Ventilsitzscheibe entlangstreichen kann, da hierdurch z.B. Partikel von einem zwischen den Ventilscheiben angeordneten Gleitmittel, wie anhaftender Schmierstoff, abgespült oder ausgewaschen werden können und dadurch schon nach kurzer Gebrauchsdauer eine Schwergängigkeit des Ventils auftreten kann.

Der Erfindung liegt die Aufgabe zugrunde, daß im Oberbegriff des Anspruchs 1 angegebene Ventil zu verbessern und insbesondere unempfindlicher gegenüber dem durchströmenden Medium zu machen.

Diese Aufgabe wird erfindungsgemäß durch die im kennzeichnenden Teil des Anspruchs 1 angegebenen Merkmale gelöst.
Weitere Ausgestaltungen der Erfindung sind in den Ansprüchen 2 bis 7 angegeben.

Bei der vorgeschlagenen Einrichtung wird mit einfachen Maßnahmen erreicht, daß ein einseitiges Anströmen der Ventilregulierscheibe vermieden und dadurch ein unerwünschtes Verdrehen oder Selbstdrosseln sicher verhindert wird. Darüber hinaus wird vermieden, daß das durchströmende Medium direkt auf die freiliegenden Dichtflächen der Ventilsitzscheibe und der Ventilregulierscheibe auftrifft und somit das Abspülen der Fett- oder Schmiermittelschicht stark reduziert wird.

Ein Ausführungsbeispiel der Erfindung ist in der Zeichnung dargestellt und wird im folgenden näher beschrieben. Es zeigt
- Figur 1: ein Absperr- und Regulierventil im Längsschnitt;
- Figur 2: das Absperr- und Regulierventil gemäß Figur 1 in Schnittebene II;
- Figur 3: das Absperr- und Regulierventil gemäß Figur 2 mit um 90° zueinander verdrehten Ventilscheiben;
- Figur 4: eine Abdeckscheibe des Absperr- und Regulierventils gemäß Figur 1 in vergrößerter Darstellung in der Schnittebene IV der Figur 5;
- Figur 5: die Abdeckscheibe gemäß Figur 4 in Draufsicht.

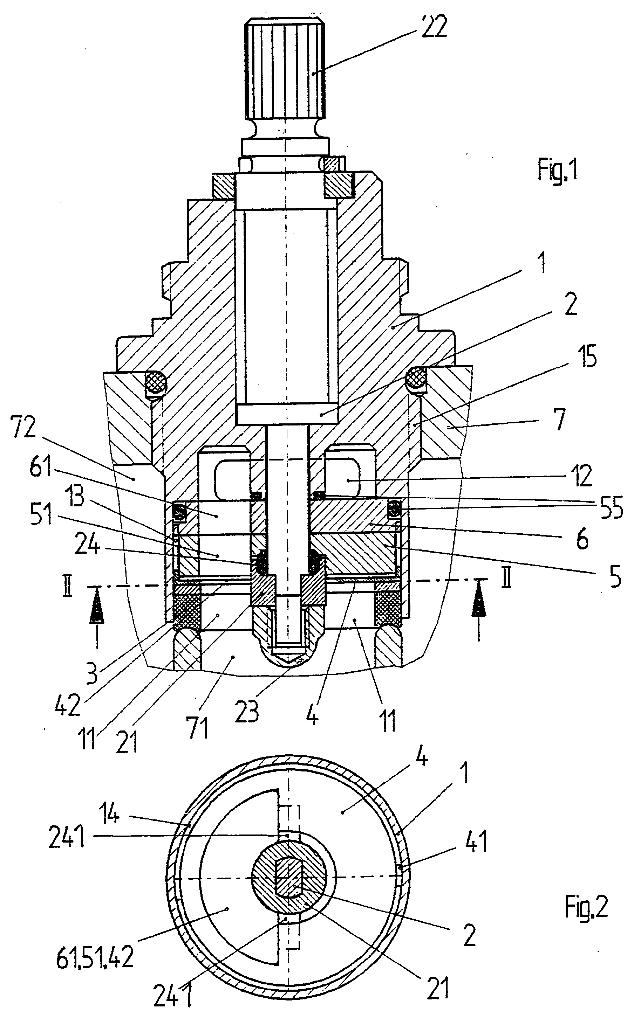

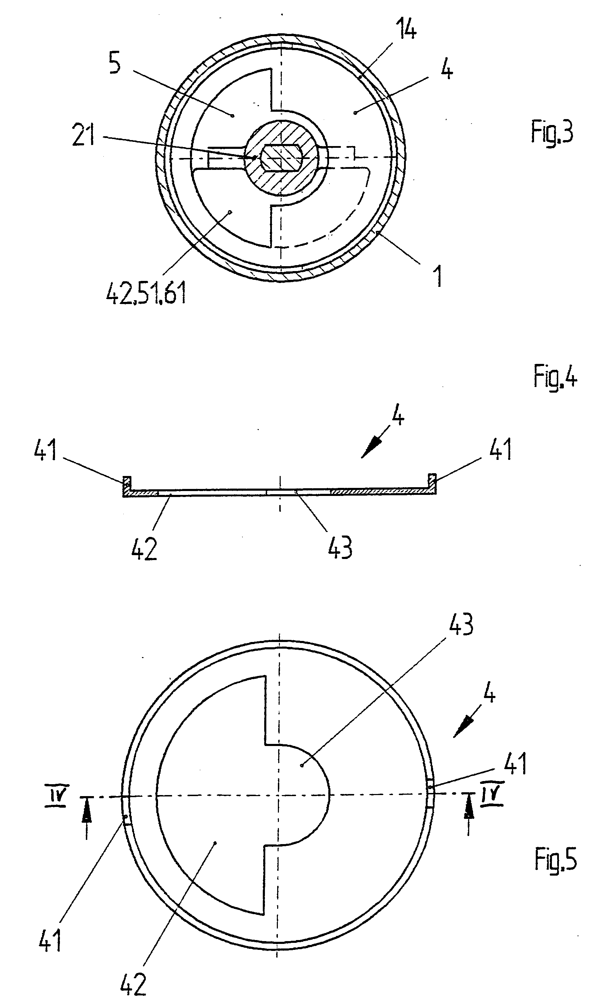

Das in Figur 1 dargestellte Absperr- und Regulierventil ist in einem Armaturenkörper 7 einmontiert gezeigt. Das Ventil ist dabei als Baueinheit ausgebildet, die insgesamt mit einem Gehäuse 1 mittels Gewinde 15 in den Armaturenkörper 7 einschraubbar ist. Das zuströmende Medium gelangt von einem Kanal 71 des Armaturenkörpers 7 in eine stirnseitig ausgebildete Einlaßöffnung 11 des Gehäuses 1 und von hier über Durchtrittsöffnungen 42, 51, 61 in eine Auslaßöffnung 12 des Gehäuses 1 und tritt dann in einen Ablaufkanal 72 des Armaturenkörpers 7 aus.
Konzentrisch in dem Gehäuse 1 ist eine Betätigungsspindel 2 gelagert, wobei das eine äußere Ende der Betätigungsspindel 2 eine Verzahnung 22 aufweist zur Aufnahme eines in der Zeichnung nicht dargestellten Griffstücks. Mit dem inneren verjüngten Teil durchgreift die Betätigungsspindel 2 eine Ventilsitzscheibe 6 und eine Ventilregulierscheibe 5 und trägt am inneren Endbereich einen Mitnehmer 21, der drehfest aber axial verschiebbar mit der Betätigungsspindel 2 verbunden ist. Zur Axialsicherung und Verspannung auf der Betätigungsspindel 2 wird der Mitnehmer 21 von einer Hutmutter 23 zusammen mit einem gummielastischen Dicht- und Federring 24 gegen die Ventilregulierscheibe 5 gestrammt. Zur drehfesten Verbindung mit der Ventilregulierscheibe 5 greift der Mitnehmer 21 mit zwei gegenüberliegenden Armen 241 in entsprechende Ausnehmungen der Ventilregulierscheibe 5 ein, so daß eine formschlüssige Drehverbindung zwischen Betätigungsspindel 2 über den Mitnehmer 21 zu der Ventilregulierscheibe 5 besteht.
Die Ventilsitzscheibe 6 ist in Axialnuten 13 axial verschiebbar, aber drehfest im Gehäuse 1 angeordnet, wobei sie in der Einbaulage mit Dichtringen 55 an Schultern im Gehäuse 1 anliegt.
Stromaufwärts im Bereich der Einlaßöffnung 11 ist ein Dichtelement 3 angeordnet, mit dem ein dichter Übergang vom Armaturenkörper 7 zum Gehäuse 1 in der Einbaulage, wie in Figur 1 gezeigt ist, erreicht wird.
Zwischen dem Dichtelement 3 und der Ventilregulierscheibe 5 ist eine Abdeckscheibe 4 mit Nasen 41, die in die Axialnuten 13 einfassen, drehfest angeordnet, wobei in der Einbaulage die Abdeckscheibe 4 gegen eine Ringschulter 14 im Gehäuse 1 axial abgestützt wird, so daß die Abdeckscheibe 4 andererseits einen Axialanschlag für das Dichtelement 3 bildet und dieses in der Einbaulage zur Abdichtung zwischen Armaturenkörper und Gehäuse 1 verspannbar ist. Wie insbesondere aus Figur 2 ersichtlich ist, sind die drei Scheiben, Ventilsitzscheibe 6, Ventilregulierscheibe 5, Abdeckscheibe 4, jeweils mit einer kreisringförmigen Durchtrittsöffnung versehen, deren Bogenlänge etwas unter 180° beträgt. Das Absperr- und Mengenregulierventil kann somit mit einer Drehung der Betätigungsspindel 2 um 180° von der in Figur 1 und 2 gezeigten voll geöffneten Ventilstellung in die voll geschlossene Ventilstellunggedreht werden. In Figur 3 ist das Ventil in einer Drosselstellung gezeigt, wobei die Ventilregulierscheibe 5 zur Ventilsitzscheibe 6 um 90° verdreht ist.
Die Abdeckscheibe 4 ist, wie insbesondere aus Figur 4 und 5 zu entnehmen ist, aus Metallblech, vorzugsweise Messingblech, hergestellt, wobei die beiden Nasen 41 um 90° umgebördelt sind, so daß sie in der Einbaulage in die stromabwärts hinter der Ringschulter 14 ausgebildete Axialnuten 13 einfassen können. Die kreisringförmige Durchtrittsöffnung 42 ist dabei mit einer konzentrisch zur Mittelachse angeordneten Ausnehmung 43 versehen, so daß die Nabe des Mitnehmers 21 durch die Abdeckscheibe 4 hindurchfassen kann. Neben der im Ausführungsbeispiel gezeigten zweiteiligen Ausführung von Dichtelement 3 und Abdeckscheibe 4 können diese beiden Teile auch einstückig ausgebildet werden, wobei dann der Dichtring, z.B. aus Gummi, an der Abdeckscheibe 4 anvulkanisiert werden kann.

Durch die Vorschaltung der Abdeckscheibe 4 vor der verdrehbaren Ventilregulierscheibe 5 wird erreicht, daß in Drosselstellungen die Dichtfläche der Ventilsitzscheibe 6 von der Abdeckscheibe 4 mit Hilfe der im wesentlichen kongruent ausgebildeten Durchtrittsöffnung 42 geschützt ist. Das zuströmende Medium wird durch die Durchtrittsöffnung 42 in der Abdeckscheibe 4 gerichtet und gelangt im wesentlichen koaxial durch die Durchtrittsöffnungen 51,61 der zueinander verdrehten Ventilscheiben, wie es insbesondere aus Figur 3 zu entnehmen ist. Ein seitliches Anströmen der Ventilregulierscheibe 5 wird mit der vorgeschalteten Abdeckscheibe 4 wirksam verhindert.

## Patentansprüche

1. Absperr- und Regulierventil, insbesondere für Was serarmaturen, mit einem wenigstens eine axiale Einlaß- und eine radiale Auslaßöffnung (11,12) aufweisenden, in Armaturenkörper (7) einsetzbaren Gehäuse (1), in dem quer zur Längsachse eine mit wenigstens einer Durchtrittsöffnung (61) versehene Ventilsitzscheibe (6) unverdrehbar gehalten ist und an der eine verdrehbare Ventilregulierscheibe (5) an der stromaufwärts gelegenen Seite anliegt, wobei zwischen dem Zulaufkanal des Armaturenkörpers (7) und dem Gehäuse (1) ein Dichtelement (3) vorgesehen ist, dadurch gekennzeichnet, daß stromabwärts hinter dem Dichtelement (3) eine Abdeckscheibe (4) vor der Ventilregulierscheibe (5) im Gehäuse (1) unverdrehbar gehaltert ist, die entsprechend der stromabwärts angeordneten Ventilsitzscheibe (6) eine oder mehrere im wesentlichen kongruente Durchtrittsöffnungen (42) aufweist.

2. Absperr- und Regulierventil nach Anspruch 1, dadurch gekennzeichnet, daß die Abdeckscheibe (4) vorstehende Nasen (41) hat, die in Axialnuten (13) des Gehäuses (1) einfassen, die außerdem zur drehfesten Anordnung der Ventilsitzscheibe (6) dienen.

3. Absperr- und Regulierventil nach Anspruch 1 oder 2, dadurch gekennzeichnet, daß die Abdeckscheibe (4) axial an einer Ringschulter (14) im Gehäuse (1) anliegt, die außerdem der Abstützung des Dichtelements (3) dient.

4. Absperr- und Regulierventil nach einem der Ansprüche 1 bis 3, dadurch gekennzeichnet, daß die Abdeckscheibe (4) eine Durchtrittsöffnung (42) in Form eines Kreisringteiles mit einem Bogen von unter 180° aufweist, wobei die Abdeckscheibe (4) noch eine konzentrische Ausnehmung (43) für die Nabe eines Mitnehmers (23) hat.

5. Absperr- und Regulierventil nach einem der Ansprüche 1 bis 4, dadurch gekennzeichnet, daß die Abdeckscheibe (4) mit geringem Abstand vor der Ventilregulierscheibe (5) angeordnet ist.

6. Absperr- und Regulierventil nach Anspruch 2 oder nach einem der Ansprüche 3 bis 5 wenn auf Anspruch 2 rückbezogen, dadurch gekennzeichnet, daß die Abdeckscheibe (4) aus Metallblech, vorzugsweise Messinglech, hergestellt ist, wobei die Nasen (41) um 90° in Fließrichtung des Mediums umgebördelt sind.

7. Absperr- und Regulierventil nach einem der Ansprüche 1 bis 6, dadurch gekennzeichnet, daß die Abdeckscheibe mit dem Dichtelement einstückig ausgebildet ist.

## Claims

1. A shut-off and regulating valve, especially for water fitments, with a housing (1) which has at least one axial inlet opening and a radial outlet opening (11,12) and which can be installed in fitment bodies (7), and in which there is non-rotatably held, transversely to the longitudinal axis, a valve seat disc (6) which is provided with at least one passage opening (61) and against which bears a rotatable valve regulating disc (5) on the upstream side, a sealing element (3) being provided between the infeed channel of the fitment body (7) and the housing (1), characterised in that downstream behind the sealing element (3) there is non-rotatably retained in front of the valve regulating disc (5) in the housing (1) a cover disc (4) which, corresponding to the valve seat disc (6) arranged downstream, has one or more substantially congruent passage openings (42).

2. A shut-off and regulating valve according to Claim 1, characterised in that the cover disc (4) has projecting lugs (41) which engage in axial grooves (13) of the housing (1), which also serve for the non-rotatable arrangement of the valve seat disc (6).

3. A shut-off and regulating valve according to Claim 1 or 2, characterised in that the cover disc (4) bears axially against an annular shoulder (14) in the housing (1) which also serves to support the sealing element (3).

4. A shut-off and regulating valve according to one of Claims 1 to 3, characterised in that the cover disc (4) has a passage opening (42) in the shape of a segment of a circle with an arc of less than 180°, the cover disc (4) also having a concentric recess (43) for the hub of a carrier (23).

5. A shut-off and regulating valve according to one of Claims 1 to 4, characterised in that the cover disc (4) is arranged at a slight distance in front of the valve regulating disc (5).

6. A shut-off and regulating valve according to Claim 2 or according to one of Claims 3 to 5, when referring back to Claim 2, characterised in that the cover disc (4) is produced from metal sheet, preferably brass sheet, the lugs (41) being flanged through 90° in the direction of flow of the medium.

7. A shut-off and regulating valve according to one of Claims 1 to 6, characterised in that the cover disc is integral with the sealing element.

## Revendications

1. Elément de robinet d'arrêt et de régulation notamment pour de la robinetterie sanitaire, comportant au moins un orifice d'entrée axial et un orifice de sortie radial, (11, 12), avec un boîtier (1) qui se place dans le corps (7) du robinet, boîtier dans lequel, transversalement à l'axe longitudinal, se trouve un disque à siège de soupape (6) muni d'au moins une ouverture de passage (61), ce disque étant maintenu bloqué en rotation, et un disque de régulation de soupape (5), susceptible d'être tourné, est appliqué contre la face amont du disque à soupape, et entre le canal d'alimentation du corps de robinet (7) et le boîtier (1) il est prévu un élément d'étanchéité (3), caractérisé en ce qu'en aval, derrière l'élément d'étanchéité (3), est maintenu dans le boîtier (1), de manière bloquée en rotation, un disque de recouvrement (4) en avant du disque de régulation de soupape (5), ce disque ayant un ou plusieurs orifices de passage (42) essentiellement correspondants, en fonction du disque à siège de soupape (6) placé en aval.

2. Elément de robinet d'arrêt et de régulation selon la revendication 1, caractérisé en ce que le disque de recouvrement (4) comporte des becs (41) en saillie, venant prendre dans des rainures axiales (13) du boîtier (1) et qui servent en outre à bloquer en rotation le disque à siège de soupape (6).

3. Elément de robinet d'arrêt et de régulation selon la revendication 1 ou 2, caractérisé en ce que le disque de recouvrement (4) est appliqué axialement contre un épaulement annulaire (14) dans le boîtier (1) servant en outre d'appui à l'élément d'étanchéité (3).

4. Elément de robinet d'arrêt et de régulation selon l'une des revendications 1 à 3, caractérisé en ce que le disque de recouvrement (4) comporte un orifice de passage (42) en forme de partie d'anneau de cercle avec un arc inférieur à 180°, le disque de recouvrement (4) ayant également une cavité concentrique (43) pour le moyeu de l'organe d'entraînement (23).

5. Elément de robinet d'arrêt et de régulation selon l'une des revendications 1 à 4, caractérisé en ce que le disque de recouvrement (4) se trouve à une faible distance en avant du disque de régulation de soupape (5).

6. Elément de robinet d'arrêt et de régulation selon la revendication 2 ou l'une des revendications 3 à 5 en combinaison avec la revendication 2, caractérisé en ce que le disque de recouvrement (4) est réalisé dans une tôle de métal, de préférence une tôle de laiton, les becs (41) étant rabattus de 90° dans la direction de passage du fluide.

7. Elément de robinet d'arrêt et de régulation selon l'une des revendications 1 à 6, caractérisé en ce que le disque de recouvrement est réalisé en une seule pièce avec l'élément d'étanchéité.
